# EUROPÄISCHE PATENTSCHRIFT

(11) **EP 1 045 149 B1**
(45) Veröffentlichungstag und Bekanntmachung des Hinweises auf die Patenterteilung: **07.05.2003**
(21) Anmeldenummer: 99125500.1
(22) Anmeldetag: 21.12.1999
(51) Int. Cl.: F04D 13/06, F04D 29/58, H02K 11/04, H02K 7/14

(54) **Kühlmittelpumpe**
Coolant pump
Pompe à liquide de refroidissement

(30) Priorität: 13.04.1999 DE 19916551
(43) Veröffentlichungstag der Anmeldung: 18.10.2000
(73) Patentinhaber: Pierburg GmbH, 41460 Neuss (DE)
(72) Erfinder: Radermacher, Bernhard, 41748 Viersen (DE); Garcke, Henning, 47877 Willich (DE); Zacher, Wolfgang, Dr., 04720 Döbeln (DE)

(56) Entgegenhaltungen:
- EP-A- 0 664 381
- DE-A- 2 516 575
- DE-A- 19 646 617
- GB-A- 2 330 014
- US-A- 3 644 067
- US-A- 4 225 292
- US-A- 5 248 245
- US-A- 5 785 013

## Beschreibung

Die Erfindung betrifft eine Kühlmittelpumpe nach dem Oberbegriff des Anspruchs 1. Eine solche Pumpe ist bekannt aus GB-A-2 330 019.

Weiterhin, derartige Kühlmittelpumpen werden für Heizungs- oder Kühlzwecke für Kraftfahrzeuge benötigt (EP 0 664 381 B1), entweder der Fahrzeugkabine oder der Antriebsmaschine.

Es liegt mit einer solchen Kühlmittelpumpe ein Produkt vor, das als Massenartikel sehr preiswert herstellbar sein soll, wobei gleichzeitig eine hohe Qualität gewährleistet sein muß.
Diesen Anforderungen werden bekannte Kühlmittelpumpen nicht gerecht.

Es ist daher Aufgabe der Erfindung, eine gattungsgemäße Kühlmittelpumpe derart zu gestalten, daß eine preiswerte und qualitativ hochwertige Ausführung möglich wird.

Diese Aufgabe ist durch die im Kennzeichen des Anspruches 1 angegebenen Merkmale gelöst worden. Vorteilhafte Weiterbildungen der Erfindung sind mit den Unteransprüchen angegeben.

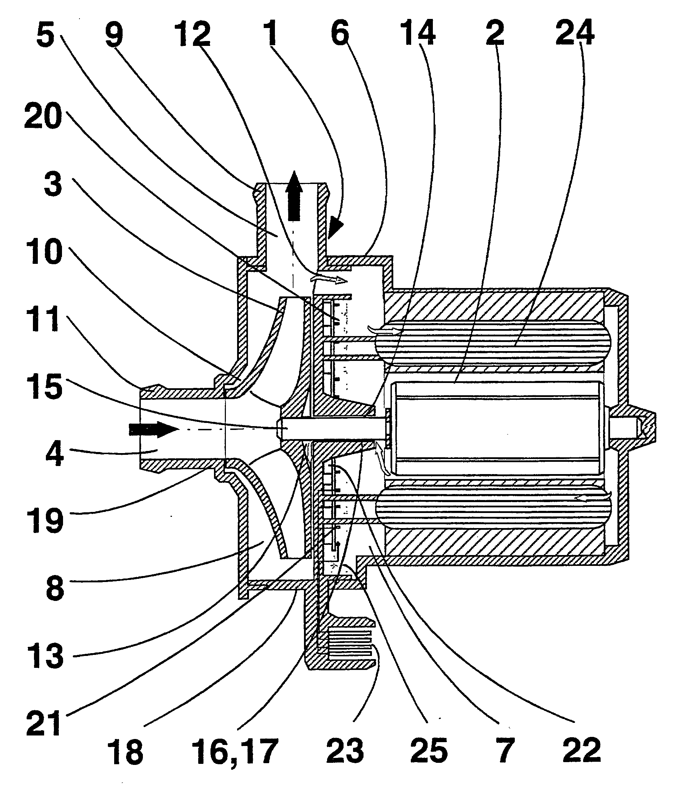

Ein Ausführungsbeispiel der erfindungsgemäßen Kühlmittelpumpe ist in der Zeichnung dargestellt und wird nachfolgend beschrieben.

Die Zeichnung zeigt einen Längsschnitt einer Kühlmittelpumpe, wie sie für den Einsatz in ein Kraftfahrzeug als Kühl- oder Heizmittelpumpe Verwendung findet. Es handelt sich hierbei um eine Kühlmittelpumpe 1 mit einem elektronisch kommutierten Elektromotor 2, mit einer Kreiselpumpe 3, insbesondere einer mit axialem Einlaß 4 und radialem Auslaß 5, und mit einem zusammengesetzten Gehäuse 6, das eine Motorkammer 7, eine Pumpenkammer 8 mit einem Auslaßstutzen 9 und eine Einlaßkammer 10 mit einem Einlaßstutzen 11 aufweist.

Es ist nun vorgesehen, daß die Pumpenkammer 8 im Bereich des Auslaßstutzens 9 einen in die Pumpenkammer 8 einmündenden Verbindungskanal 12 aufweist und in der Pumpenkammermitte 13 eine Lageröffnung 14 für eine Motorwelle 15, wobei diese Lageröffnung 14 in Verbindung mit der Welle 15 einen Lagerspalt 16 begrenzt, der einen Verbindungskanal 17 zwischen Pumpen- und Motorkammer 8 und 7 bildet.

Durch diese Maßnahme wird eine Kühlmittelströmung (Pfeil) bewirkt. Der im Auslaß 5 herrschende hohe Druck setzt sich über den Verbindungskanal 12 in die Motorkammer 7 und von dieser über den vom Lagerspalt 16 gebildeten Verbindungskanal 17 unter Druckabfall in die Pumpenkammer 8 im Bereich der Kammermitte 13, in dem niedrigerer Druck herrscht, durch. Die Größe der Kühlmittelströmung ist von dem Druckabfall und dem Strömungswiderstand des Verbindungskanals 17 abhängig.

Diese Kühlmittelströmung bewirkt eine Kühlung der in der Motorkammer befindlichen elektrischen und elektronischen Bauteile, so daß es möglich wird, thermisch hochbelastete Bauteile einzusetzen, d. h. diese können im Hochbelastungsbereich betrieben werden, womit eine kostengünstige Ausführung gegeben ist.

Um einen vereinfachten mechanischen Aufbau zu erreichen, ist es vorteilhaft, wenn die Motorkammer 7 durch ein die Pumpenkammer 8, den Auslaßstutzen 9, den Verbindungskanal 12 und die Lageröffnung 14 aufweisendes Mittelgehäuse 18 verschlossen ist, wobei die Pumpenkammer 8 durch einen die Einlaßkammer 10 und den Einlaßstutzen 11 aufweisenden Gehäusedeckel 19 verschlossen ist.

Die einzelnen Gehäusebauteile 18, 19 können z. B. durch Reib- oder Ultraschallschweißen verbunden werden. Das Mittelgehäuse 18 weist in seiner in die Motorkammer 7 hineinragende Wandung eine schaltungskammer 20 auf, in der Schaltungselektroden 21 und mit diesen verbundene Elektronikbauteile 22 angeordnet sind, wobei die Schaltungselektroden 21 mit dem aus Kunststoff bestehenden Mittelgehäuse 18 vergossen und als Steckerfassungskontakte 23 nach außen geführt sind.

Hierdurch läßt sich eine verbesserte Kühlung der Elektronikbauteile 22 erreichen und eine kostengünstige Ausführung der schaltungsanordnung, insbesondere das Vergießen ersetzt teure Verbindungselemente wie Schrauben oder Nieten für die Halterung der Schaltungselektroden 22.

In der dargestellten Ausführung ist die Schaltungskammer 20 gegenüber der Motorkammer 8 hermetisch abgedichtet, und zwar derart, daß die Schaltungskammer 20 nach Verschaltung der Schaltungselektroden 21 mit den Elektronikbauteilen 22 und Statorwicklungen 24 durch vergießen mit einem Vergußmittel 25 abgedichtet wird.

Die erfindungsgemäße Kühlmittelpumpe 1 läßt sich in der dargestellten Ausführung kostengünstig herstellen durch Verwendung von elektrischen oder elektronischen Bauteilen 21, 22, 24 geringerer Belastbarkeit, da nun eine ausreichende Kühlung zur Begrenzung der Betriebstemperaturen gegeben ist.

Der vereinfachte mechanische Aufbau selbst läßt eine kostengünstige Großserienfertigung zu.

## Patentansprüche

1. Kühlmittelpumpe mit einem elektronisch kommutierten Elektromotor, mit einer Kreiselpumpe, insbesondere einer mit axialem Einlaß und radialem Auslaß, und mit einem zusammengesetzten Gehäuse, das eine Motorkammer, eine Pumpenkammer mit einem Auslaßstutzen und eine Einlaßkammer mit einem Einlaßstutzen aufweist, wobei die Pumpenkammer (8) im Bereich des Auslaßstutzens (9) einen in die Pumpenkammer (8) einmündenden Verbindungskanal (12) aufweist und in der Pumpenkammermitte (13) eine Lageröffnung (14) für eine Motorwelle (15), wobei diese Lageröffnung (14) in Verbindung mit der Welle (15) einen Lagerspalt (16) begrenzt, der einen Verbindungskanal (17) zwischen Pumpen-und Motorkammer (8 und 7) bildet und die Motorkammer (7) durch ein die Pumpenkammer (8), den Auslaßstutzen (9), den Verbindungskanal (12) und die Lageröffnung (14) aufweisendes Mittelgehäuse (18) verschlossen ist, wobei die Pumpenkammer (8) durch einen die Einlaßkammer (10) und den Einlaßstutzen (11) aufweisenden Gehäusedeckel (19) verschlossen ist, **dadurch gekennzeichnet, daß** das Mittelgehäuse (18) in seiner in die Motorkammer (7) hineinragende Wandung eine Schaltungskammer (20) aufweist, in der Schaltungselektroden (21) und mit diesen verbundene Elektronikbauteile (22) angeordnet sind, wobei die Schaltungselektroden (21) mit dem aus Kunststoff bestehenden Mittelgehäuse (18) vergossen und als Steckerfassungskontakte (23) nach außen geführt sind.

2. Kühlmittelpumpe nach Anspruch 1, **dadurch gekennzeichnet, daß** die Schaltungskammer (20) gegenüber der Motorkammer (8) hermetisch abgedichtet ist.

3. Kühlmittelpumpe nach Anspruch 2, **dadurch gekennzeichnet, daß** die Schaltungskammer (20) nach Verschaltung der Schaltungselektroden (21) mit den Elektronikbauteilen (22) und Statorwicklungen (24) durch Vergießen mit einem Vergußmittel (25) abgedichtet wird.

## Claims

1. A coolant pump comprising an electronically commutated electric motor, a centrifugal pump having in particular an axial inlet and a radial outlet, and comprising a multicomponent housing including a motor chamber, a pump chamber with an outlet connection and an inlet chamber with an inlet connection, the pumping chamber (8) having a connecting channel (12) opening into the pumping chamber (8) in the area of the outlet connection (9) and having at the centre (13) of the pumping chamber a bearing aperture (14) for a motor shaft (15), said bearing aperture (14) delimiting in combination with the shaft (15) a bearing gap (16) which forms a connecting channel (17) between the pumping chamber (8) and the motor chamber (7), and the motor chamber (7) being closed by an intermediate housing (18) which includes the pumping chamber (8), the outlet connection (9), the connecting channel (12) and the bearing aperture (14), the pumping chamber (8) being occluded by a housing cover (19) which includes the inlet chamber (10) and the inlet connection (11), **characterised in that** the intermediate housing (18) includes in its wall projecting into the motor chamber (7) a circuit chamber (20) in which are arranged circuit electrodes (21) and electronic components (22) connected to the latter, the circuit electrodes (21) being moulded into the intermediate housing (18) consisting of plastics material and being conducted outwardly as plug socket contacts (23).

2. A coolant pump according to Claim 1, **characterised in that** the circuit chamber (20) is hermetically sealed with respect to the motor chamber (8).

3. A coolant pump according to Claim 2, **characterised in that**, after connection of the circuit electrodes (21) to the electronic components (22) and to the stator windings (24), the circuit chamber (20) is sealed by encapsulation with an encapsulation medium (25).

## Revendications

1. Pompe à liquide de refroidissement présentant un moteur électrique à commutation électronique, une pompe centrifuge en particulier une pompe à entrée axiale et sortie radiale, et un carter composé qui présente une chambre pour moteur, une chambre de pompage avec une tubulure de sortie et une chambre d'entrée avec une tubulure d'entrée, la chambre de pompage (8) présentant, dans la zone de la tubulure de sortie (9), un canal de liaison (12) débouchant dans la chambre de pompage (8) et au centre (13) de la chambre de pompage une ouverture formant palier (14) pour un arbre de moteur (15), cette ouverture formant palier (14) limitant, en liaison avec l'arbre (15), un interstice de palier (16) qui forme un canal de liaison (17) entre la chambre de pompage et pour moteur (8 et 7), la chambre pour moteur (7) étant fermée par un carter central (18) comportant la chambre de pompage (8), la tubulure de sortie (9), le canal de liaison (12) et l'ouverture formant palier (14), la chambre de pompage (8) étant fermée par un couvercle de carter (19) comportant la chambre d'entrée (10) et la tubulure d'entrée (11), **caractérisée en ce que** le carter central (18) présente dans sa paroi pénétrant dans la chambre pour moteur (7) une chambre de commutation (20), dans laquelle sont disposées des électrodes de commutation (21) et des composants électroniques (22) reliés à celles-ci, les électrodes de commutation (21) étant moulées avec le carter central (18) constitué de matière plastique et étant amenées vers l'extérieur en tant que contacts (23) de douilles de connecteurs.

2. Pompe à liquide de refroidissement selon la revendication 1, **caractérisée en ce que** la chambre de commutation (20) est étanchéifiée hermétiquement vis-à-vis de la chambre pour moteur (8).

3. Pompe à liquide de refroidissement selon la revendication 2, **caractérisée en ce que** la chambre de commutation (20), après connexion des électrodes de commutation (21) avec les composants électroniques (22) et les bobinages de stator (24), est étanchéifiée après enrobage à l'aide d'un produit d'enrobage (25).
